# EUROPÄISCHE PATENTSCHRIFT

(11) **EP 1 841 835 B1**
(45) Veröffentlichungstag und Bekanntmachung des Hinweises auf die Patenterteilung: **11.01.2012**
(21) Anmeldenummer: 06706337.0
(22) Anmeldetag: 20.01.2006
(51) Int. Cl.: C09K 21/12, B27K 3/52

(54) **BRANDSCHUTZMITTEL**
FIREPROOFING AGENT
AGENT IGNIFUGE

(30) Priorität: 21.01.2005 DE 102005003167
(43) Veröffentlichungstag der Anmeldung: 10.10.2007
(73) Patentinhaber: Petermüller, Manfred, 91166 Georgensgmünd (DE)
(72) Erfinder: PETERMÜLLER, Manfred, 91166 Georgensgmünd (DE)
(74) Vertreter: Witzany, Manfred
(86) Internationale Anmeldenummer: PCT/EP2006/000512
(87) Internationale Veröffentlichungsnummer: WO 2006/077142

(56) Entgegenhaltungen:
- DE-A1- 19 619 388
- US-A- 4 061 689
- US-A- 4 195 115
- US-A- 5 049 187
- US-A- 5 225 464
- US-B1- 6 228 914

## Beschreibung

Die Erfindung betrifft ein Brandschutzmittel gemäß dem Oberbegriff des Patentanspruchs 1 sowie ein Verfahren zum Reduzieren der Brandgefahr eines entzündbaren Stoffes gemäß dem Oberbegriff des Patentanspruchs 8.

Aus der DE 29 10 595 C2 ist ein flammwidriger Verbundformkörper bekannt, der mit einem Intumeszenzmittel belegt ist. Dieses Intumeszenzmittel besteht aus einem Kohlenstoffbildner, einem Katalysator, einem Treibmittel und einem kugelförmigen Füllstoff. Als Kohlenstoffbildner wird u. a. ein mehrwertiger Alkohol wie Pentaerythrit oder Dipentaerythrit angegeben. Der Katalysator ist eine Phosphorsäurequelle, die sich unterhalb der Zersetzungstemperatur des Kohlenstoffbildners unter Bildung von Phosphorsäure zersetzt. Das Intumeszenzmittel bildet bei Temperaturen über 180°C einen Schaum, der die Flammenfront eine gewisse Zeit lang vom Verbundformkörper abhält.

Aus der EP 0 992 566 B1 ist ein intumeszierendes Laminat bekannt, welches mehrwertige Alkohole und Phosphorsäure enthält.

Aus der US 5 225 464 A ist ein weiteres intumeszierendes Laminat bekannt, welches u. a. Pentaerythrit und Phosphorsäure enthält.

Aus der US 5 049 187 ist eine wässerige Lösung für ein Brandschutzmittel bekannt. Es enthält neben Ammoniumpolyphosphat mehrwertige Alkohole.

Aus der US 4 195 115 ist eine intumeszierende Substanz bekannt, die mehrwertige Alkohole und einen Phosphorsäure-Katalysator aufweist.

Aus der DE 196 19 388 A1 ist ein wasserlösliches Schutzmittel bekannt, welches Polyole, wie beispielsweise Pentaerythrit oder Natriumglukonat und Ammoniumphosphate aufweist.

Aus der DE 693 30 296 T2 ist eine intumeszierende, feuerschützende Mastix-Beschichtungszusammensetzung bekannt, die Ammoniumphosphat, Polyalkohole und Phosphorsäure enthält.

Aus der US 5 387 655 A ist ein Intumeszenzmittel bekannt, welches eine Mischung aus Phosphorsäureestern mit Polyolen aufweist.

Aus der EP 1 042 415 B1 ist ein Intumeszenzmittel bekannt, welches u. a. Aminotrimethyl-Phosphorsäure oder Aminotrimethyl-Phosphonsäure zusammen mit einem mehrwertigen Alkohol aufweist.

Der Erfindung liegt die Aufgabe zugrunde, ein Brandschutzmittel anzugeben, das auch bei Beschädigung der Oberfläche des entzündbaren Stoffes eine zuverlässige Brandschutzhemmung bis zu hohen Brandtemperaturen besitzt.

Diese Aufgabe wird erfindungsgemäß mit den Merkmalen des Patentanspruchs 1 sowie mit den Schritten des Patentanspruchs 8 gelöst.

Das Brandschutzmittel gemäß Anspruch 1 besteht im wesentlichen aus zwei wichtigen Komponenten, nämlich einem Kohlenstoffspender und einer phosphorhaltigen Säure. Diese phosphorhaltigen Säure hat auf den Kohlenstoffspender eine im Wesentlichen katalytische Wirkung, durch die der Kohlenstoff bei hohen Temperaturen, wie sie im Brandfall herrschen, in ein Fulleren umgewandelt wird. Diese Fullerene bestehen ausschließlich aus Kohlenstoff, sind jedoch Makromoleküle, die auch bei hohen Temperaturen nicht entflammbar sind. Im Brandfall bildet sich daher auf dem entzündbaren Stoff eine Fulleren-Schicht, die ein Entzünden des an und für sich entzündbaren Stoffes hemmt. Wird die gebildete Fulleren-Schicht lokal zerstört, so bildet sich unter dieser erneut eine Fulleren-Schicht aus. Auf diese Weise schützt sich der entzündbare Stoff im Brandfall von selbst. Der entzündbare Stoff wird im Brandfall zwar an seiner Oberfläche beschädigt, insbesondere verfärbt, eine großflächige Ausbreitung des Brandes wird jedoch auf diese Weise zuverlässig verhindert. Dies ist insbesondere in brandgefährdeten Bereichen, wie chemischen Anlagen, oder im Fahrzeugbereich, insbesondere bei Flugzeugen, von erheblicher Bedeutung. In diesen Bereichen war es bisher unmöglich, entzündbare Stoffe, wie beispielsweise Holz, Papier oder thermoplastische Kunststoffe einzusetzen, da hierdurch die Brandgefahr zu groß geworden wäre. Ein Ausweichen auf teurere Materialien war daher geboten. Durch das erfindungsgemäße Brandschutzmittel können auch in den genannten brandgefährdeten Bereichen preisgünstige Baumaterialien eingesetzt werden. Ein weiterer Anwendungsbereich des Brandschutzmittels liegt im Fertighausbau, wo üblicherweise Holz für tragende Elemente eingesetzt wird. Durch das erfindungsgemäße Brandschutzmittel werden derartige Bauten wesentlich brandsicherer.

Der Kohlenstoffspender ist eine Alkalimetallverbindung eines mehrfachen Alkohols. Bei der Umwandlung dieses mehrfachen Alkohols in Fullerene spielt die Phosphorsäure lediglich die Rolle eines Katalysators, wobei vom Kohlenstoffspender Wasser abgespaltet wird. Dieses Wasser geht als Dampf in die umgebende Atmosphäre und verursacht gleichzeitig eine erwünschte Kühlwirkung des entzündbaren Stoffes.

Zur Erzielung einer möglichst effektiven Fulleren-Bildung im Brandfall weist die phosphorhaltige Säure mindestens eine Aminogruppe auf. Damit kann die phosphorhaltige Säure eine größere Zahl von Säureresten binden, wobei das Molekül trotzdem relativ kompakt ausgebildet ist. Der Bindungspartner der Säurereste ist ein Stickstoff-Atom und führt bei der Dissoziierung der phosphorhaltigen Säure im Brandfall zu einer zusätzlichen Abstickung des Brandes durch Sauerstoffentzug.

Als phosphorhaltige Säure hat sich gemäß Anspruch 2 eine Aminodialkylphosphorsäure, eine Aminodialkylphosphonsäure, eine Aminodialkyl-phosphorige-Säure, eine Aminotrialkylphosphorsäure, eine Aminotrialkylphosphonsäure oder eine Aminotrialkyl-phosphorige-Säure bewährt.

Aminodimethylphosphorsäure, Aminodimethylphosphonsäure, Aminodimethyl-phosphorige-Säure, Aminotrimethylphosphorsäure, Aminotrimethylphosphonsäure und Aminotrimethylphosphorige-Säure besitzen eine recht hohe Potenz, den Kohlenstoffspender in Fullerene umzuwandeln und wird daher gemäß Anspruch 3 als phosphorhaltige Säure bevorzugt.

Als Alkalimetall hat sich gemäß Anspruch 4 Natrium als besonders wirksam herausgestellt.

Ein besonders vorteilhafter Kohlenstoffspender ergibt sich aus Anspruch 5. Natriumheptagluconat weist ein Kohlenstoffgerüst mit sieben Kohlenstoffatomen auf, bei dem sechs Kohlenstoffatome als funktionelle Gruppe eine OH-Gruppe aufweisen. Das siebte Kohlenstoffatom ist Teil einer COONa-Gruppe. In dieser Struktur ist jedes Kohlenstoffatom mit Ausnahme der Carboxylatgruppe mit Wasserstoff und mit einer OH-Gruppe verbunden. Bei der katalytischen Reaktion mit der Phosphorsäure wird der Wasserstoff und die OH-Gruppe abgespalten und bildet Wasser, so daß die Alkan-Kette übrig bleibt und das gewünschte Fulleren bildet. Durch die gewählte Auswahl an funktionellen Gruppen ergibt sich eine effiziente chemische Reaktion unter Wasserabspaltung und damit eine optimale Fulleren-bildung. Dies senkt die Aktivierungsenergie zur Fulleren-Bildung, so daß der entzündbare Stoff optimal durch das Brandschutzmittel geschützt wird.

Gemäß Anspruch 6 ist es günstig, wenn das Brandschutzmittel zusätzlich Ammoniak enthält, das insbesondere die Lösbarkeit der Phosphorverbindung und des Kohlenstoffspenders ineinander verbessert. Dies ist zur Erzielung einer optimalen katalytischen Wirkung der Phosphorverbindung wichtig.

Um das Brandschutzmittel möglichst effektiv auf den entzündbaren Stoff auftragen zu können, ist es gemäß Anspruch 7 günstig, wenn es in wässriger Lösung vorliegt. Damit kann es sehr einfach auf den entzündbaren Stoff aufgesprüht werden. Alternativ ist es auch möglich, das Brandschutzmittel in wässriger Form direkt mit dem entzündbaren Stoff zu mischen, so lange dieses sich in einer flüssigen Phase befindet.

Bei dem Verfahren gemäß Anspruch 8 wird zum Reduzieren der Brandgefahr eines entzündbaren Stoffs auf diesen ein Brandschutzmittel aufgebracht, welches im Brandfall aufgrund der hohen Temperaturen auf dessen Oberfläche eine Fullerenschicht erzeugt. Diese Fullerenschicht ist nur sehr schwer entflammbar, so daß sie den entzündbaren Stoff im Brandfall zuverlässig schützt. Wird die Fullerenschicht lokal zerstört, so bildet das Brandschutzmittel unter der zerstörten Schicht eine neue Fullerenschicht aus, so daß der entzündbare Stoff optimal geschützt wird. Die Fullerenschicht wird als Netzwerk auf der Oberfläche des zu schützenden Körpers abgeschieden.

Die Maschenweite des Netzwerks beträgt dabei nicht mehr als 2 µm, so daß eine Flammenfront nicht mehr bis zur Oberfläche des zu schützenden Körpers vordringen kann. Auf diese Weise genügt eine recht geringe Fullerenmenge, um den Körper zu schützen. Dies hat wiederum zur Folge, daß nur eine relativ geringe Menge an Brandschutzmittel zur Bildung eines effektiven Schutzes ausreicht.

Um das Brandschutzmittel einfach auf den entzündbaren Stoff auftragen zu können, ist es gemäß Anspruch 9 vorteilhaft, wenn es in wässriger Lösung, Emulsion oder Suspension auf den entzündbaren Stoff aufgesprüht wird. Dies ist technisch sehr einfach und damit kostengünstig zu realisieren, wobei trotzdem eine hohe Schutzwirkung des entzündbaren Stoffs gewährleistet ist.

Alternativ oder zusätzlich kann das Brandschutzmittel auch gemäß Anspruch 10 in den entzündbaren Stoff inkorporiert werden, so daß der entzündbare Stoff sehr effektiv im gesamten Volumen geschützt ist. Dies ist insbesondere in jenen Fällen wichtig, in denen der entzündbare Stoff im Brandfall brechen kann, so daß neue, sonst nicht geschützte Oberflächen entstehen.

Eine einfache Realisierung des vorgenannten Verfahrens ergibt sich aus Anspruch 11. Dabei wird der entzündbare Stoff in zumindest teilweise flüssiger Form mit dem Brandschutzmittel vermischt, bevor dieser erhärtet. Falls der entzündbare Stoff ein Polymer ist, kann das Brandschutzmittel in die nicht polymerisierte Flüssigkeit mit den Monomeren und dem Polymerisationshilfsmittel eingemischt werden. Nach Abschluß der Polymerisationsreaktion ist das Polymer im gesamten Volumen durch das Brandschutzmittel geschützt.

Außerdem ist es gemäß Anspruch 12 vorteilhaft, wenn das Brandschutzmittel mit einem Bindemittel vermischt wird. Dieses kann beispielsweise ein Leim, Klebstoff oder ein Kunstharz sein, welche feste Teile des entzündbaren Stoffs, wie beispielsweise Gummigranulat oder Sägespäne zu einer festen Matrix bindet.

### Beispiel

Eine Lösung besteht aus

| | | |
|---|---|---|
| 35 % | Wasser , | H₂O |
| 10 % | 80 %ige Phosphorsäure, | 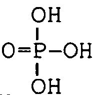 |
| 24 % | 25 %iges Ammoniak | NH₃ |
| und | | |
| 31 % | Aminotrimethylphosphonsäure | 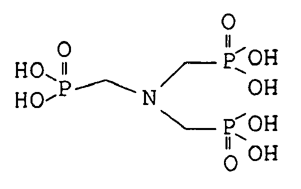 |

Die genannten Mengenangaben stellen Gewichtsprozente dar. Zusätzlich ist in der Lösung als Kohlenstoffspender eine von den oberen Mengenangaben unabhängige Menge an Natriumheptagluconat 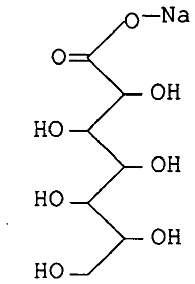 enthalten.

Die Lösung wird auf eine Preßspanplatte aufgesprüht. Nach dem Abtrocknen der Oberfläche ist die Preßspanplatte gegenüber direkten Flammen mit Temperaturen bis 1.200°C nicht entflammbar.

Die vorgenannte Rezeptur kann bezüglich der verwendeten Anteile in weiten Grenzen variiert werden. Für jede der vorgenannten Komponenten sind jeweils 1 bis 50 Teile ansetzbar. Zusätzlich kann das Brandschutzmittel Netzmittel zur Erzielung einer besseren Benetzung von Oberflächen oder Verdickungsmittel wie beispielsweise Alkylamine enthalten.

Im Brandfall setzen bei hohen Temperaturen folgende Reaktionen ein:

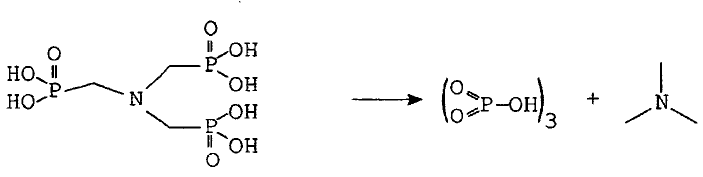

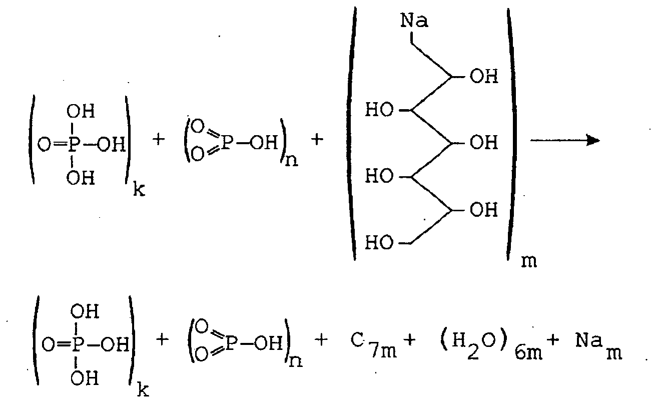

## Patentansprüche

1. Brandschutzmittel zur Reduktion der Brandgefahr eines entzündbaren Stoffes, wobei das Brandschutzmittel wenigstens einen Kohlenstoffspender und wenigstens eine phosphorhaltige Säure aufweist, **dadurch gekennzeichnet, daß** der Kohlenstoffspender eine Alkalimetallverbindung eines mehrfachen Alkohols mit einem Alkangerüst mit mindestens sieben Kohlenstoffatomen aufweist, und daß die phosphorhaltige Säure mindestens eine organische Verbindung bestehend aus mindestens einer Säure aus der Gruppe Phosphorsäure, Phosphonsäure und phosphorige Säure mit mindestens einer Aminogruppe aufweist.

2. Brandschutzmittel nach Anspruch 1, **dadurch gekennzeichnet, daß** die phosphorhaltige Säure mindestens eine Aminodi- und/oder Aminotrialkyl-Phosphorsäure, -Phosphonsäure und/oder -phosphorige Säure aufweist.

3. Brandschutzmittel nach Anspruch 2, **dadurch gekennzeichnet, daß** die phosphorhaltige Säure mindestens eine Aminodi- und/oder Aminotrimethyl-Phosphorsäure, -Phosphonsäure und/oder -phosphorige Säure aufweist.

4. Brandschutzmittel nach mindestens einem der Ansprüche 1 bis 3, **dadurch gekennzeichnet, daß** das Alkalimetall Natrium ist.

5. Brandschutzmittel nach mindestens einem der Ansprüche 1 bis 4, **dadurch gekennzeichnet, daß** der Kohlenstoffspender Natriumheptagluconat aufweist.

6. Brandschutzmittel nach mindestens einem der Ansprüche 1 bis 5, **dadurch gekennzeichnet, daß** das Brandschutzmittel Ammoniak enthält.

7. Brandschutzmittel nach mindestens einem der Ansprüche 1 bis 6, **dadurch gekennzeichnet, daß** das Brandschutzmittel vor dem Aufbringen auf den entzündbaren Stoff in wässriger Lösung, Emulsion oder Suspension, vorliegt.

8. Verfahren zum Reduzieren der Brandgefahr eines entzündbaren Stoffes, **dadurch gekennzeichnet, daß** auf den entzündbaren Stoff ein Brandschutzmittel gemäß mindestens einem der Ansprüche 1 bis 7 aufgebracht wird, welches im Brandfall auf der Oberfläche des entzündbaren Stoffes eine Fullerenschicht erzeugt, die als Netzwerk mit einer Maschenweite von nicht mehr als 2 µm ausgebildet ist.

9. Verfahren nach Anspruch 8, **dadurch gekennzeichnet, daß** das Brandschutzmittel in wässriger Lösung, Emulsion oder Suspension auf den entzündbaren Stoff aufgesprüht wird.

10. Verfahren nach Anspruch 8 oder 9, **dadurch gekennzeichnet, daß** das Brandschutzmittel in den entzündbaren Stoff inkorporiert wird.

11. Verfahren nach Anspruch 10, **dadurch gekennzeichnet, daß** der entzündbare Stoff in mindestens teilweise flüssiger Form mit dem Brandschutzmittel vermischt wird, bevor dieser erhärtet.

12. Verfahren nach Anspruch 11, **dadurch gekennzeichnet, daß** das Brandschutzmittel mit einem Bindemittel vermischt wird.

## Claims

1. Flame retardant for reducing the risk of fire posed by an ignitable substance, where the flame retardant comprises at least one carbon donor and at least one phosphorus-containing acid, **characterized in that** the carbon donor comprises an alkali metal compound of a polyhydric alcohol having an alkane skeleton having at least seven carbon atoms, and **in that** the phosphorus-containing acid comprises at least one organic compound composed of at least one acid from the group of phosphoric acid, phosphonic acid and phosphorous acid, having at least one amino group.

2. Flame retardant according to Claim 1, **characterized in that** the phosphorus-containing acid conprises at least one aminodi- and/or aminotrialkylphosphoric, -phosphonic and/or -phosphorous acid.

3. Flame retardant according to Claim 2, **characterized in that** the phosphorus-containing acid comprises at least one aminodi- and/or aminotrimethylphosphoric, -phosphonic and/or - phosphorous acid.

4. Flame retardant according to at least one of Claims 1 to 3, **characterized in that** the alkali metal is sodium.

5. Flame retardant according to at least one of Claims 1 to 4, **characterized in that** the carbon donor comprises sodium heptagluconate.

6. Flame retardant according to at least one of Claims 1 to 5, **characterized in that** the flame retardant comprises ammonia.

7. Flame retardant according to at least one of Claims 1 to 6, **characterized in that**, prior to application to the ignitable substance, the flame retardant is present in aqueous solution, emulsion or suspension.

8. Process for reducing the risk of fire posed by an ignitable substance, **characterized in that** a flame retardant according to at least one of Claims 1 to 7 is applied to the ignitable substance and in the event of fire produces, on the surface of the ignitable substance, a fullerene layer in the form of network whose mesh width is not more than 2 µm.

9. Process according to Claim 8, **characterized in that** the flame retardant is applied by spraying in aqueous solution, emulsion or suspension to the ignitable substance.

10. Process according to Claim 8 or 9, **characterized in that** the flame retardant is incorporated into the ignitable substance.

11. Process according to Claim 10, **characterized in that**, before the ignitable substance hardens, it is mixed in at least to some extent liquid form with Lhe flame retardant.

12. Process according to Claim 11, **characterized in that** the flame retardant is mixed with a binder.

## Revendications

1. Agent ignifuge pour la réduction du risque d'incendie d'une substance inflammable, l'agent ignifuge présentant au moins un donneur de carbone et au moins un acide contenant du phosphore, **caractérisé en ce que** le donneur de carbone présente un composé de métal alcalin d'un alcool polyvalent, présentant une structure d'alcane comprenant au moins sept atomes de carbone et **en ce que** l'acide contenant du phosphore présente au moins un composé organique constitué par au moins un acide du groupe formé par l'acide phosphorique, l'acide phosphonique et l'acide phosphoreux présentant au moins un groupe amino.

2. Agent ignifuge selon la revendication 1, **caractérisé en ce que** l'acide contenant du phosphore présente au moins un acide aminodialkylphosphorique et/ou aminotrialkylphosphorique, aminodialkylphosphonique et/ou aminotrialkylphosphonique et/ou aminodialkylphosphoreux et/ou aminotrialkylphosphoreux.

3. Agent ignifuge selon la revendication 2, **caractérisé en ce que** l'acide contenant du phosphore présente au moins un acide aminodiméthylphosphorique et/ou aminotrimétrylphosphorique, aminodiméthylphosphonique et/ou aminotriméthylphosphonique et/ou aminodiméthylphosphoreux et/ou aminotriméthylphosphoreux.

4. Agent ignifuge selon au moins l'une quelconque des revendications 1 à 3, **caractérisé en ce que** le métal alcalin est le sodium.

5. Agent ignifuge selon au moins l'une quelconque des revendications 1 à 4, **caractérisé en ce que** le donneur de carbone présente de l'heptagluconate de sodium.

6. Agent ignifuge selon au moins l'une quelconque des revendications 1 à 5, **caractérisé en ce que** l'agent ignifuge contient de l'ammoniac.

7. Agent ignifuge selon au moins l'une quelconque des revendications 1 à 6, **caractérisé en ce que** l'agent ignifuge, avant l'application sur la substance inflammable, se trouve en solution, émulsion ou suspension aqueuse.

8. Procédé de réduction du risque d'incendie d'une substance inflammable, **caractérisé en ce qu'**on applique sur la substance inflammable un agent ignifuge selon au moins l'une quelconque des revendications 1 à 7, qui génère, en cas d'incendie, une couche de fullerène à la surface de la substance inflammable qui est réalisée sous forme d'un réseau présentant une largeur de mailles qui n'est pas supérieure à 2 µm.

9. Procédé selon la revendication 8, **caractérisé en ce que** l'agent ignifuge est pulvérisé en solution, émulsion ou suspension aqueuse sur la substance inflammable.

10. Procédé selon la revendication 8 ou 9, **caractérisé en ce que** l'agent ignifuge est incorporé dans la substance inflammable.

11. Procédé selon la revendication 10, **caractérisé en ce que** la substance inflammable est mélangée dans une formé au moins partiellement liquide avec l'agent ignifuge, avant que celui-ci durcisse.

12. Procédé selon la revendication 11, **caractérisé en ce que** l'agent ignifuge est mélangé avec un liant.
